# FASCICULE DE BREVET EUROPEEN

(11) **EP 2 786 469 B1**
(45) Date de publication et mention de la délivrance du brevet: **20.05.2020**
(21) Numéro de dépôt: 12794411.4
(22) Date de dépôt: 30.10.2012
(51) Int. Cl.: H02K 1/27

(54) **ROTOR DE MACHINE ELECTRIQUE TOURNANTE ET MACHINE ELECTRIQUE TOURNANTE COMPRENANT UN TEL ROTOR**
ROTOR FÜR EINE ELEKTRISCHE DREHENDE MASCHINE UND ELEKTRISCHE DREHENDE MASCHINE MIT EINEM DERARTIGEN ROTOR
ROTOR FOR A ROTARY ELECTRIC MACHINE AND ROTARY ELECTRIC MACHINE COMPRISING SUCH A ROTOR

(30) Priorité: 01.12.2011 FR 1161016
(43) Date de publication de la demande: 08.10.2014
(73) Titulaire: Valeo Equipements Electriques Moteur, 94046 Créteil Cedex (FR)
(72) Inventeur: BOUARROUDJ, Lilya, F-94220 Charenton Le Pont (FR); MATT, Jean-Claude, F-21000 Dijon (FR); LABROSSE, Jean-Claude, F-94220 Charenton Le Pont (FR)
(86) Numéro de dépôt international: PCT/FR2012/052510
(87) Numéro de publication internationale: WO 2013/079840

(56) Documents cités:
- EP-A1- 0 391 791
- EP-A1- 1 420 499
- EP-A2- 2 246 962
- WO-A1-01/22560
- DE-A1-102009 045 101

## Description

### DOMAINE TECHNIQUE DE L'INVENTION.

La présente invention concerne un rotor à aimants permanents destiné à une machine électrique tournante.

L'invention concerne également une machine électrique tournante comprenant un rotor de ce type, notamment pour des applications dans le domaine des véhicules automobiles.

### ARRIERE PLAN TECHNOLOGIQUE DE L'INVENTION.

De par leurs performances accrues en termes de rendement et de puissance massique et volumique, les machines synchrones à aimants permanents trouvent aujourd'hui une large application dans le domaine des véhicules automobiles.

Ces machines électriques sont réalisables dans une large gamme de puissance et de vitesse et trouvent des applications aussi bien dans les véhicules de type « tout électrique » que dans les véhicules à bas CO₂ de types dits « mild-hybrid » et « full-hybrid » (en terminologie anglaise).

Les applications « mild-hybrid » concernent généralement des machines électriques de l'ordre de 8 à 10 KW, par exemple, un moteur électrique monté en face avant d'un moteur thermique et couplé à celui-ci par une courroie de transmission. Il est possible avec un tel moteur électrique de réduire la cylindrée de la motorisation thermique (« engine downsizing » en terminologie anglaise) en prévoyant une assistance électrique en couple qui fournit un appoint de puissance, notamment lors des reprises. De plus, une traction à faible vitesse, par exemple en environnement urbain, peut également être assurée par ce même moteur électrique.

Un autre exemple d'application de machines électriques de cette gamme de puissance est l'entraînement d'un compresseur centrifuge d'un système de double suralimentation d'un moteur thermique. Le compresseur électrique assiste à bas régime le turbo-compresseur entraîné par les gaz d'échappement et permet de franchir une étape supplémentaire dans la réduction des cylindrées.

Les applications de type « full-hybrid» concernent généralement des moteurs de 30 à 50 KW pour des architectures de type série et/ou parallèle avec un niveau d'intégration plus abouti du ou des moteurs électriques dans la chaîne de traction du véhicule.

Les remarquables performances des machines à aimants permanents actuelles sont pour une grande part dues aux développement des aimants aux terres rares tels que les aimants de type Néodyme-Fer-Bore (NeFeB), Samarium-Fer (SmFe), ou Samarium-Cobalt (SmCo), qui peuvent présenter des rémanences dépassant le tesla.

Cependant, des machines à aimants permanents comprenant un rotor présentant une structure dite "à concentration de flux" avaient de longue date permis d'obtenir des flux magnétiques importants avec des aimants de moindre rémanence, par exemples des aimants obtenus à partir de ferrites frittées ou liées.

De longue date également, les caractéristiques dimensionnelles et magnétiques ce type de structure ont été optimisées, soit en menant de nombreux essais, soit, plus récemment en réalisant des simulations sur ordinateur, de manière à améliorer le rendement électrique des machines.

Un exemple d'optimisation dimensionnelle des aimants et des pôles magnétiques d'un rotor à aimants permanents a été divulgué en 1971 dans le brevet d'invention FR2084279.

Par EP2246962A2, il est connu une machine à aimants permanents comprenant un stator et un rotor. Le rotor comprend plusieurs aimants permanents destinés à générer un champ magnétique qui interagit avec un champ magnétique du stator de manière à produire un couple mécanique. Le rotor comporte un arbre sur lequel sont agencées plusieurs structures en saillie réparties régulièrement de manière circonférentielle. Les structures en saillie forment des queues d'aronde pour l'assemblage de plusieurs piles de tôles magnétiques formant des dents polaires. Les aimants permanents sont logés entre les dents polaires. Des éléments inférieurs formant coins sont également prévus pour maintenir les piles de tôles magnétiques formant les dents polaires et les aimants permanents.

Par ailleurs, EP1420499A1 A1 décrit un rotor pour machine électrique comportant des aimants permanents qui sont logés dans des fentes radiales se prolongeant axialement sur toute la longueur du rotor. Les fentes comprennent une extrémité élargie à proximité de la périphérie extérieure du corps du rotor.

Il est également connu par WO01/22560A1 un rotor pour une machine électrique comprenant une pluralité de pôles indépendants ayant une section triangulaire et des aimants permanents ayant une section trapézoïdale. Les formes des pôles indépendants et des aimants permanents coopèrent de manière à autoriser une amélioration du logement des aimants permanents.

Le document EP0391791A1 décrit une machine électrique tournante à aimants permanents, de type synchrone. La machine comprend un rotor à concentration de flux. Le rotor comporte un arbre en matériau amagnétique sur lequel s'appuient des aimants permanents parallélépipédiques disposés radialement. Des pièces polaires en tôle magnétique ferrosilicium sont présentes entre les aimants permanents. Les aimants sont en ferrite et le rapport de la hauteur de la section d'un aimant traversée par le flux d'induction divisée par le diamètre d'alésage d'un entrefer de la machine est compris entre 0,19 et 0,27.

L'optimisation dimensionnelle des pôles magnétiques a reçu récemment un regain d'attention comme suite au renchérissement des aimants aux terres rares lié à une conjoncture géo-politique défavorable.

La mise en œuvre d'aimants aux terres rares dans un rotor de machine électrique destinée aux applications de l'automobile n'étant plus économiquement rentable, et probablement non pérenne, l'autre terme de l'alternative est constitué par les aimants basés sur des ferrites.

Mais la rémanence d'une ferrite étant plus faible que celle d'un aimant aux terres rares, le remplacement des aimants aux terres rares par des ferrites conduit à une machine de moindres performances.

### DESCRIPTION GENERALE DE L'INVENTION.

Le but de la présente invention est donc d'optimiser la forme des pôles d'un rotor pour maximiser le flux magnétique dans les pôles et préserver ainsi notamment le couple de la machine.

Elle a précisément pour objet un rotor de machine électrique tournante comprenant une pluralité de pôles Nord et pôles Sud alternés et formés à partir d'une pluralité d'aimants permanents agencés dans des premiers évidements.

Ces premiers évidements se prolongent le long d'un axe du rotor et sont répartis régulièrement entre une partie circonférentielle et une partie centrale de la masse magnétique du rotor de manière à définir une pluralité de sections polaires circonférentielles présentant un pas polaire prédéterminé.

Les aimants permanents du type de rotor dont il s'agit présentent une première section radiale polygonale et un premier plan de symétrie axial.

Les sections polaires présentent quant à elles une seconde section radiale formant lobe extérieurement et un second plan de symétrie axial.

Le rotor selon l'invention est remarquable en ce que ce lobe recouvre partiellement les aimants permanents de manière à rendre maximum un flux magnétique utile circulant radialement dans chacune des sections polaires et à rendre minimum un flux magnétique de fuite circulant dans une direction circonférentielle dans la partie circonférentielle du rotor, les sections polaires du rotor présentent un angle de recouvrement polaire prédéterminé de manière à rendre maximum ce flux magnétique utile et à rendre minimum le flux magnétique de fuite, cet angle de recouvrement polaire étant défini comme un angle de vue du lobe à partir d'un point de l'axe du rotor, les sections polaires présentent de préférence un ratio de recouvrement prédéterminé de manière à rendre maximum le flux magnétique utile et à rendre minimum le flux magnétique de fuite, le ratio de recouvrement étant égal à un rapport de l'angle de recouvrement polaire au pas polaire prédéterminé et le ratio de recouvrement est sensiblement compris entre 0,35 et 0,50.

Le rotor selon l'invention est aussi remarquable en ce que la première section radiale des aimants permanents comporte une partie rectangulaire proche de la partie circonférentielle adjacente à une partie en forme de coin proche de la partie centrale.

Fort avantageusement, le rotor selon l'invention comprend en outre au moins une pluralité de seconds évidements qui se prolongent axialement et qui sont agencés entre les aimants permanents dans une partie intermédiaire du rotor entre la partie centrale et la partie circonférentielle.

Des tirants amagnétiques sont de préférence agencés dans ces seconds évidements.

Dans une variante de réalisation du rotor selon l'invention, la partie circonférentielle comporte en outre fort avantageusement des rainures axiales qui sont agencées entre les sections polaires en regard des aimants permanents et qui forment ouverture des premiers évidements.

On tirera bénéfice du fait que les aimants permanents du rotor de machine électrique tournante selon l'invention sont constitués de ferrite.

L'invention concerne également une machine électrique tournante qui comprend un rotor présentant les caractéristiques ci-dessus.

Ces quelques spécifications essentielles auront rendu évidents pour l'homme de métier les avantages apportés par le rotor de machine électrique tournante selon l'invention, ainsi que par la machine électrique correspondante, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** montre une vue en coupe radiale simplifiée d'un rotor à aimants permanents dans un mode de réalisation principal de l'invention, agencé dans un stator, montré en coupe radiale partielle, d'une machine électrique tournante selon l'invention.
La **Figure 2** montre la variation de la constante de force électromotrice entre phases représentative du flux magnétique utile dans les sections polaires en fonction de l'angle polaire de recouvrement.
La **Figure 3** montre la variation de la constante de force électromotrice entre phases représentative du flux magnétique utile dans les sections polaires en fonction du ratio de recouvrement.
La **Figure 4** montre une vue en coupe radiale simplifiée d'un rotor à aimants permanents selon une variante de réalisation de l'invention, agencé dans un stator, montré en coupe radiale partielle, d'une machine électrique tournante selon l'invention.
Les **Figures 5a et 5b** montrent respectivement la forme d'onde de la force électromotrice entre phases à vide et les niveaux d'harmoniques correspondants d'une machine électrique tournante comprenant un rotor selon le mode de réalisation principal de l'invention montré sur la **Figure 1**.
Les **Figures 6a et 6b** montrent respectivement la forme d'onde de la force électromotrice entre phases à vide et les niveaux d'harmoniques correspondants d'une machine électrique tournante comprenant un rotor selon la variante de réalisation de l'invention montrée sur la **Figure 4**.

### DESCRIPTION DES MODES DE REALISATIONS PREFERES DE L'INVENTION.

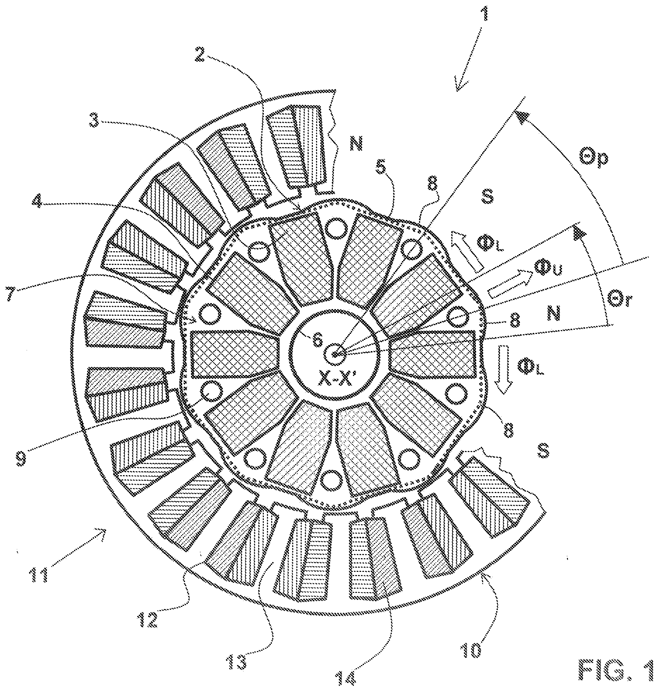

La coupe radiale simplifiée d'un rotor 1 à aimants permanents dans le mode de réalisation principal de l'invention, représentée sur la **Figure 1**, montre bien l'agencement dans la masse magnétique 2 des aimants permanents 3 dans des premiers évidements 4 répartis régulièrement entre une partie circonférentielle 5 et une partie centrale 6 de manière à former une pluralité de pôles Nord N et pôles Sud S alternés.

Le rotor 1 selon l'invention est du type à concentration de flux. Les aimants permanents 3 sont globalement de section sensiblement rectangulaire, mais chanfreinés en forme de coin vers l'axe X-X' du rotor 1. Ils s'étendent symétriquement au voisinage de plans axiaux équi-angulaires.

Les premiers évidements 4 dans lesquels sont agencés les aimants permanents 3 délimitent dix sections polaires 7 circonférentielles.

L'ensemble de ces sections polaires 7 forme en coupe radiale une figure sensiblement circulaire à plusieurs lobes 8, correspondant à la saillance des pôles N, S.

Les sections polaires 7 comportent des deuxièmes évidements 9 agencés entre les aimants permanents 3. Elles s'étendent symétriquement au voisinage de plans axiaux équi-angulaires.

Ces deuxièmes évidements 9 présentent une section circulaire et reçoivent des tirants amagnétiques maintenant les paquets de tôles métalliques formant des masses magnétiques 2, 10 du rotor 1 et d'un stator 11.

Ces deuxièmes évidements 9 contribuent également au contrôle du champ magnétique dans le rotor 1.

Dans une forme de réalisation particulière de cette machine, le rotor 1 comportant dix aimants permanents 3 tourne à l'intérieur d'un stator 11 présentant une pluralité d'encoches 12 définissant une pluralité de dents statoriques 13 autour desquelles sont agencés des bobinages statoriques 14

Une réalisation concrète d'une machine comprenant un tel rotor est par exemple un moteur/génératrice de 8 à 10 KW pour des applications dans des véhicules automobiles du type dits «mild-hybrid».

Dans son mode de fonctionnement en moteur cette machine peut être conçue pour le démarrage du moteur thermique, l'assistance en couple du moteur thermique, la traction électrique à faible vitesse du véhicule ainsi que pour l'entraînement d'un compresseur centrifuge.

Les bobinages statoriques 14 sont parcourus par un courant statorique et créent un champ magnétique tournant entraînant le rotor 1. Le couple moteur fourni dépend notamment de l'intensité du courant statorique et du flux magnétique dans le rotor 1.

Ainsi que cela a été expliqué en préambule, le remplacement des aimants permanents 3 aux terres rares par des aimants permanents 3 en ferrite nécessite une optimisation des pôles magnétiques N, S pour obtenir un flux magnétique similaire dans le rotor 1, et conserver ainsi un même couple moteur pour une même intensité statorique.

Des simulations sur ordinateur de machines électriques comprenant un rotor 1 ayant les caractéristiques ci-dessus ont permis à l'entité inventive d'établir la distribution du flux magnétique dans le rotor 1 et le stator 11.

Il a été établi que le flux magnétique créé par les aimants permanents 3 et circulant dans la masse magnétique 2 du rotor 1 se répartissait entre un flux magnétique utile ΦU circulant radialement dans une section polaire 7 et un flux magnétique de fuite ΦL circulant dans une direction circonférentielle dans la partie circonférentielle 5 du rotor 1.

Le flux magnétique utile ΦU dépend du recouvrement des aimants permanents 3 par les lobes 8 des sections polaires 7. Plus ce recouvrement est important, plus le flux magnétique utile ΦU peut augmenter, mais le flux magnétique de fuite ΦL augmente aussi, ce qui a pour effet de diminuer le flux magnétique utile ΦU. Il existe donc un recouvrement optimal, qui est déterminé par la simulation, pour lequel le flux magnétique utile ΦU est maximum et le flux magnétique de fuite ΦL est minimum.

L'angle de recouvrement polaire Or, c'est-à-dire l'angle de vue d'un lobe 8 à partir d'un point de l'axe X-X' du rotor 1, est un paramètre qui permet de quantifier le recouvrement des aimants permanents 3 par les sections polaires 7.

La **Figure 1** montre bien un exemple de recouvrement partiel des aimants permanents 3 par les lobes 8 à la périphérie du rotor 1 (le trait en pointillé montrant la surface extérieure d'un rotor non-optimisé).

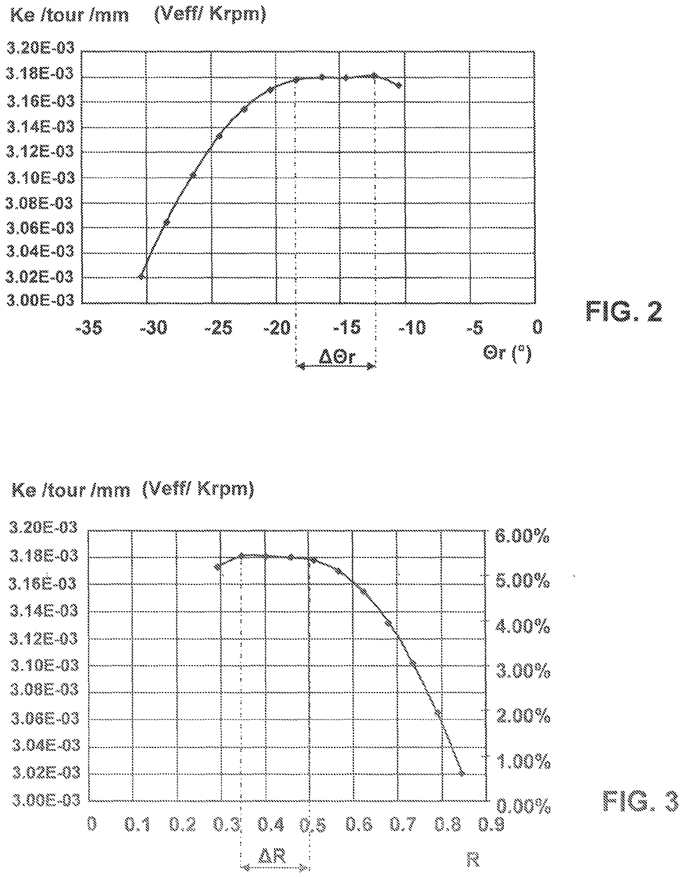

La **Figure 2** est le résultat d'une simulation sur ordinateur d'un prototype particulier de machine électrique tournante comportant le rotor décrit ci-dessus, qui montre l'évolution de la constante de force électromotrice entre phases Ke pour des valeurs de l'angle de recouvrement polaire Or comprises sensiblement entre 10° et 30° (en valeurs absolues).

Cette constante Ke est représentative du flux magnétique utile ΦU. On constate qu'elle diminue pour un angle de recouvrement polaire Or plus petit que 12° (peu ou pas de recouvrement), et pour un angle de recouvrement polaire Or plus grand que 18° (le flux magnétique de fuite ΦL devient prépondérant). Il existe donc une fourchette ΔΘr de valeurs optimales de l'angle de recouvrement angulaire Or comprise sensiblement entre 12° et 18° où le flux magnétique 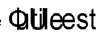 maximum, et le flux magnétique de fuite ΦL minimum.

L'entité inventive a déterminé qu'un paramètre d'optimisation, s'appliquant à un rotor 1 présentant un nombre Np quelconque de pôles N, S, était un ratio de recouvrement R définit comme le rapport Or/ Op de l'angle de recouvrement polaire Or au pas polaire Op du rotor 1 (le pas polaire Op en degrés étant égal à 360°/ Np).

La **Figure 3**, établie également par une simulation sur ordinateur, montre l'évolution de la contante de force électromotrice Ke entre phases en fonction de ce ratio de recouvrement R pour le rotor à dix pôles décrit ci-dessus (Θp= 36°).

On constate que le maximum de Ke (c'est-à-dire le maximum du flux magnétique utile ΦU) est obtenu pour un ensemble ΔR de valeurs de R sensiblement comprises entre 0,35 et 0,50. Le gain est de l'ordre de 5% entre le rotor 1 optimisé de l'invention et un rotor non optimisé (représenté en pointillé sur la **Figure 1**).

Cette structure optimisée du rotor 1 permet de préserver les performances de la machine quand des ferrites sont utilisées à la place d'aimants aux terres rares, sans trop accroître la masse des aimants permanents 3.

A technologie constante, l'invention qui contribue à l'augmentation du flux magnétique dans le rotor 1 permet également de réduire l'intensité du champ magnétique tournant créé par le stator 11 nécessaire pour produire un couple donné, et par conséquent permet de réduire la masse de cuivre nécessaire pour réaliser les bobinages statoriques 14.

La réduction de la masse des aimants permanents et du cuivre permet de diminuer les coûts de fabrication et procure donc un avantage commercial dans le domaine très concurrentiel des équipements des véhicules.

Cependant, les possibilités d'optimisation de la forme des pôles N, S dans le mode de réalisation principal de l'invention décrit ci-dessus, en jouant sur l'angle de recouvrement polaire, sont limitées par le fait que la partie circonférentielle 5, plus ou moins épaisse au regard des aimants permanents 3, présente une réluctance de fuite.

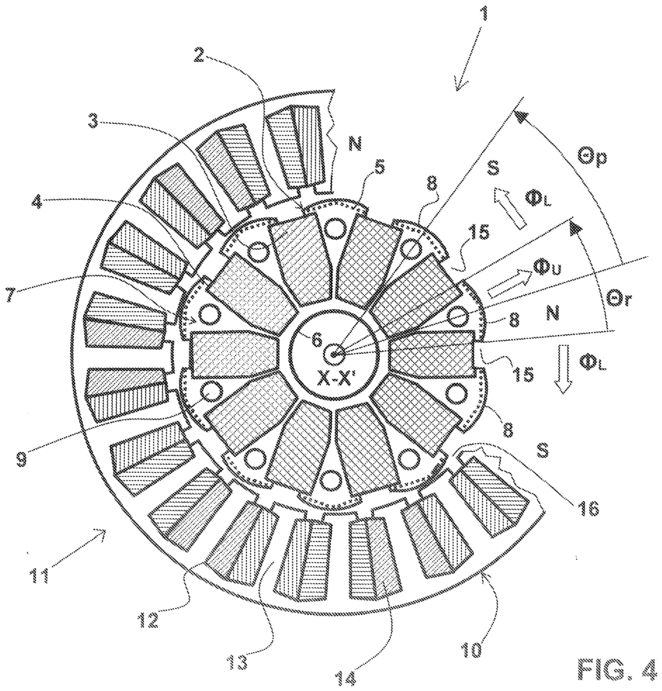

Dans une variante de réalisation montrée sur la **Figure 4**, la partie circonférentielle 5 du rotor 1 comporte en outre des rainures axiales 15 agencées entre les sections polaires 7 en regard des aimants permanents 3. Ces rainures 15 forment des ouvertures dans les premiers évidements 4 et exposent les aimants 3 à l'air de l'entrefer 16. Elles constituent donc une barrière de flux, qui permet d'augmenter l'angle polaire de recouvrement Or sans que cela ait pour conséquence une trop forte augmentation du flux magnétique de fuite ΦL.

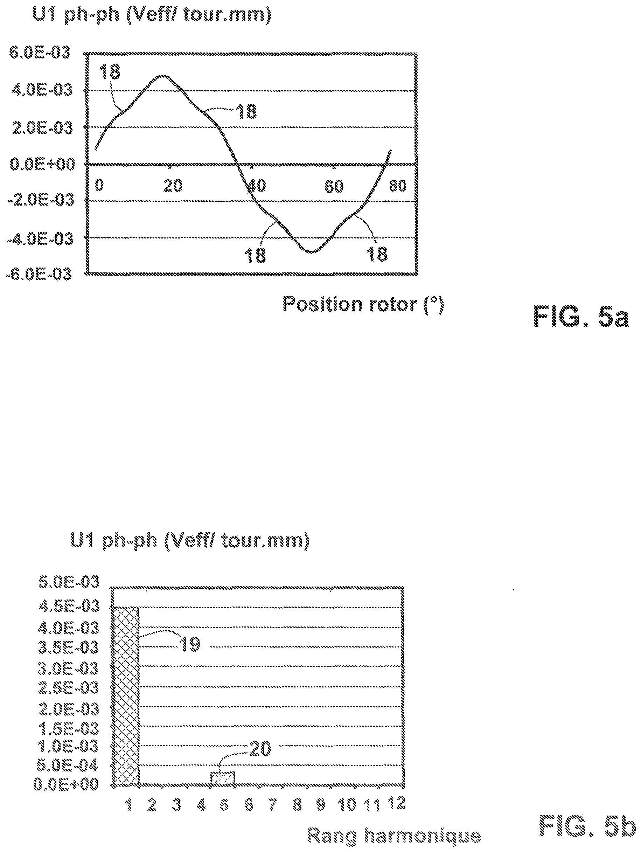

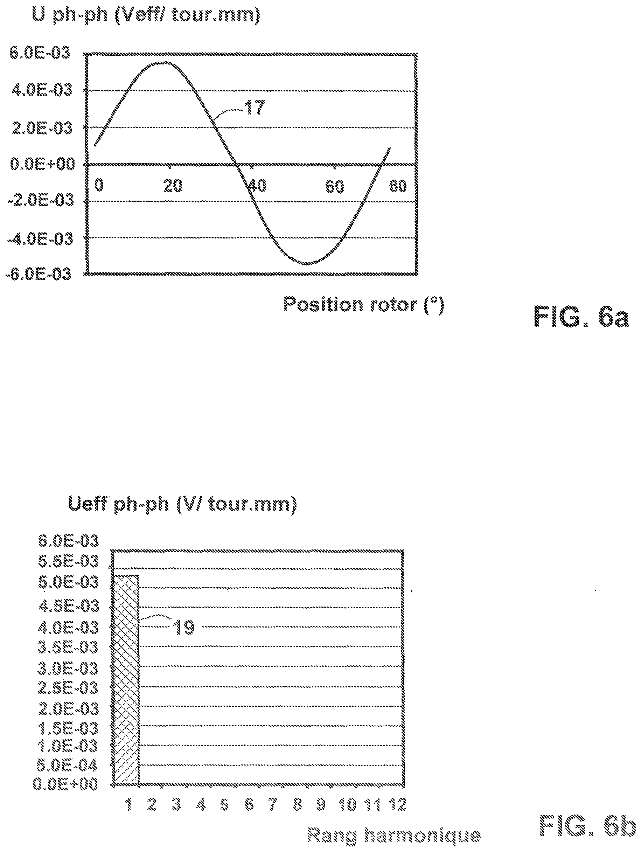

L'avantage de cette variante est la réduction du bruit magnétique généré par la machine en comparaison avec le mode de réalisation principal grâce à la diminution des distorsions harmoniques de la force électromotrice et du couple, comme le montrent les **Figures 6a et 6b**, d'une part, en comparaison des **Figures 5a et 5b**, d'autre part, correspondant à l'un et l'autre modes de réalisation, respectivement.

En effet, une forme d'onde 17 de la force électromotrice entre phases U2 ph - ph à vide d'une machine comprenant un rotor 1 selon cette variante (**Figure 4**) apparaît comme sensiblement sinusoïdale sur la **Figure 6a** alors qu'elle présente des distorsions 18 sur la **Figure 5a**.

La **Figure 6b** confirme qu'il n'y a pas d'autres harmoniques que l'harmonique fondamental 19 alors qu'un harmonique de cinquième rang 20 ayant une amplitude représentant plus de 6% de l'harmonique fondamental 19 est présent dans l'autre force électromotrice entre phases à vide U1 ph-ph d'une machine comprenant un rotor 1 selon le mode de réalisation principal (**Figure 1**).

Comme il va de soi, l'invention ne se limite pas aux seuls modes de réalisation préférentiels décrits ci-dessus.

D'autres modes de réalisation basés sur des valeurs numériques différentes de celles spécifiées ci-dessus, notamment un nombre de pôles Np différent, et correspondant à d'autres essais ou simulations de machines électriques tournantes comportant un rotor du type décrit, ne sortiraient pas du cadre de la présente invention dans la mesure où ils résultent des revendications ci-après.

## Revendications

1. Rotor (1) de machine électrique tournante comprenant une pluralité de pôles Nord (N) et pôles Sud (S) alternés et formés à partir d'une pluralité d'aimants permanents (3) agencés dans des premiers évidements (4) se prolongeant le long d'un axe (X-X') dudit rotor (1) et répartis régulièrement entre une partie circonférentielle (5) et une partie centrale (6) de la masse magnétique (2) dudit rotor (1) de manière à définir une pluralité de sections polaires (7) circonférentielles présentant un pas polaire (Op) prédéterminé, lesdits aimants permanents (3) présentant une première section radiale polygonale et un premier plan de symétrie axial, et lesdites sections polaires (7) présentant une seconde section radiale formant lobe (8) extérieurement et un second plan de symétrie axial, **caractérisé en ce que**, de manière à rendre maximum un flux magnétique utile (ΦU) circulant radialement dans chacune desdites sections polaires (7) et à rendre minimum un flux magnétique de fuite (ΦL) circulant dans une direction circonférentielle dans ladite partie circonférentielle (5) :
- ledit lobe (8) recouvre partiellement lesdits aimants permanents (3), et
- lesdites sections polaires (7) présentent un angle de recouvrement polaire (Θr) prédéterminé, ledit angle de recouvrement polaire (Θr) étant un angle de vue dudit lobe (8) à partir d'un point dudit axe (X-X'), et
- lesdites sections polaires (7) présentent un ratio de recouvrement (R) prédéterminé,
ledit ratio de recouvrement (R) étant égal à un rapport dudit angle de recouvrement polaire (Θr) audit pas polaire (Op) prédéterminé et ledit ratio de recouvrement (R) est sensiblement compris entre 0,35 et 0,50.

2. Rotor (1) de machine électrique tournante selon la revendication 1, **caractérisé en ce que** ladite première section radiale comporte une partie rectangulaire proche de ladite partie circonférentielle (5) adjacente à une partie en forme de coin proche de ladite partie centrale (6).

3. Rotor (1) de machine électrique tournante selon la revendication 1 ou 2, **caractérisé en ce qu'**il comprend au moins une pluralité de seconds évidements (9) se prolongeant axialement et agencés entre lesdits aimants permanents (3) dans une partie intermédiaire dudit rotor (1) entre ladite partie centrale (6) et ladite partie circonférentielle (5).

4. Rotor (1) de machine électrique tournante selon la revendication 3 précédente, **caractérisé en ce que** des tirants amagnétiques sont agencés dans lesdits seconds évidements (9).

5. Rotor (1) de machine électrique tournante selon l'une quelconque des revendications 1 à 4 précédentes, **caractérisé en ce que** lesdits aimants permanents (3) sont constitués de ferrite.

6. Rotor (1) de machine électrique tournante selon l'une quelconque des revendications 1 à 5 précédentes, **caractérisé en ce que** ladite partie circonférentielle (5) comporte en outre des rainures axiales (15) agencées entre lesdites sections polaires (7) en regard desdits aimants permanents (3) et formant ouverture desdits premiers évidements (4).

7. Machine électrique tournante, **caractérisée en ce qu'**elle comprend un rotor (1) selon l'une quelconque des revendications 1 à 6 précédentes.

## Patentansprüche

1. Rotor (1) einer drehenden elektrischen Maschine, der eine Vielzahl von Nordpolen (N) und Südpolen (S) beinhaltet, die sich abwechseln und durch eine Vielzahl von Permanentmagneten (3) gebildet sind, die in ersten Aussparungen (4) angeordnet sind, welche sich entlang einer Achse (X-X') des Rotors (1) erstrecken und gleichmäßig zwischen einem umlaufenden Teil (5) und einem mittigen Teil (6) der magnetischen Masse (2) des Rotors (1) verteilt sind, um eine Vielzahl von umlaufenden Polabschnitten (7) zu definieren, die eine vorgegebene Polteilung (θp) aufweisen, wobei die Permanentmagneten (3) einen ersten polygonalen radialen Abschnitt und eine erste axiale Symmetrieebene aufweisen und wobei die Polabschnitte (7) einen zweiten radialen Abschnitt, der außen eine Keule (8) bildet, und eine zweite axiale Symmetrieebene aufweisen, **dadurch gekennzeichnet, dass**, um einen Nutzmagnetfluss (ΦU), der radial durch jeden der Polabschnitte (7) verläuft, zu maximieren und einen Streumagnetfluss (ΦL), der in dem umlaufenden Teil (5) in einer umlaufenden Richtung verläuft, zu minimieren:
- die Keule (8) die Permanentmagneten (3) teilweise abdeckt und
- die Polabschnitte (7) einen vorgegebenen Polüberdeckungswinkel (θr) aufweisen, wobei der Polüberdeckungswinkel (θr) ein Sichtwinkel der Keule (8) von einem Punkt der Achse (X-X') aus ist, und
- die Polabschnitte (7) eine vorgegebene Überdeckungskennzahl (R) aufweisen,
wobei die Überdeckungskennzahl (R) gleich einem Verhältnis des Polüberdeckungswinkels (θr) zu der vorgegebenen Polteilung (θp) ist und die Überdeckungskennzahl (R) im Wesentlichen zwischen 0,35 und 0,50 liegt.

2. Rotor (1) einer drehenden elektrischen Maschine nach Anspruch 1, **dadurch gekennzeichnet, dass** der erste radiale Abschnitt einen rechteckigen Teil nahe dem umlaufenden Teil (5) beinhaltet, der an einen keilförmigen Teil nahe dem mittigen Teil (6) angrenzt.

3. Rotor (1) einer drehenden elektrischen Maschine nach Anspruch 1 oder 2, **dadurch gekennzeichnet, dass** er mindestens eine Vielzahl von zweiten Aussparungen (9) beinhaltet, die sich axial erstrecken und zwischen den Permanentmagneten (3) in einem Zwischenteil des Rotors (1) zwischen dem mittigen Teil (6) und dem umlaufenden Teil (5) angeordnet sind.

4. Rotor (1) einer drehenden elektrischen Maschine nach dem vorhergehenden Anspruch 3, **dadurch gekennzeichnet, dass** in den zweiten Aussparungen (9) nichtmagnetische Zuganker angeordnet sind.

5. Rotor (1) einer drehenden elektrischen Maschine nach einem der vorhergehenden Ansprüche 1 bis 4, **dadurch gekennzeichnet, dass** die Permanentmagneten (3) aus Ferrit bestehen.

6. Rotor (1) einer drehenden elektrischen Maschine nach einem der vorhergehenden Ansprüche 1 bis 5, **dadurch gekennzeichnet, dass** der umlaufende Teil (5) ferner axiale Nuten (15) umfasst, die zwischen den Polabschnitten (7) gegenüber den Permanentmagneten (3) angeordnet sind und eine Öffnung der ersten Aussparungen (4) bilden.

7. Drehende elektrische Maschine, **dadurch gekennzeichnet, dass** sie einen Rotor (1) nach einem der vorhergehenden Ansprüche 1 bis 6 beinhaltet.

## Claims

1. Rotating electric machine rotor (1) comprising a plurality of North poles (N) and South poles (S) that alternate and are formed from a plurality of permanent magnets (3) arranged in first openings (4) that extend along an axis (X-X') of said rotor (1) and are distributed regularly between a circumferential part (5) and a central part (6) of the magnetic mass (2) of said rotor (1) so as to define a plurality of circumferential polar sections (7) having a predetermined polar pitch (θp), said permanent magnets (3) having a first polygonal radial section and a first axial plane of symmetry, and said polar sections (7) having a second, outwardly lobe-forming radial section (8) and a second axial plane of symmetry, **characterized in that**, so as to maximize a useful magnetic flux (ΦU) circulating radially in each of said polar sections (7) and to minimize a leakage magnetic flux (ΦL) circulating in a circumferential direction in said circumferential part (5):
- said lobe (8) partially overlaps said permanent magnets (3), and
- said polar sections (7) have a predetermined angle of polar overlap (θr), said angle of polar overlap (θr) being an angle of view of said lobe (8) from a point of said axis (X-X') and
- said polar sections (7) have a predetermined overlap ratio (R),
said overlap ratio (R) being equal to a ratio of said angle of polar overlap (θr) to said predetermined polar pitch (θp) and said overlap ratio (R) lies substantially between 0.35 and 0.50.

2. Rotating electric machine rotor (1) according to Claim 1, **characterized in that** said first radial section comprises a rectangular part close to said circumferential part (5) adjacent to a corner-forming part close to said central part (6).

3. Rotating electric machine rotor (1) according to Claim 1 or 2, **characterized in that** it comprises at least a plurality of second openings (9) that extend axially and are arranged between said permanent magnets (3) in an intermediate part of said rotor (1) between said central part (6) and said circumferential part (5).

4. Rotating electric machine rotor (1) according to the preceding Claim 3, **characterized in that** nonmagnetic tie-rods are arranged in said second openings (9).

5. Rotating electric machine rotor (1) according to any one of the preceding Claims 1 to 4, **characterized in that** said permanent magnets (3) are made of ferrite.

6. Rotating electric machine rotor (1) according to any one of the preceding Claims 1 to 5, **characterized in that** said circumferential part (5) also comprises axial grooves (15) arranged between said polar sections (7) facing said permanent magnets (3) and forming the aperture of said first openings (4).

7. Rotating electric machine, **characterized in that** it comprises a rotor (1) according to any one of the preceding Claims 1 to 6.
